# EUROPÄISCHE PATENTSCHRIFT

(11) **EP 2 023 713 B1**
(45) Veröffentlichungstag und Bekanntmachung des Hinweises auf die Patenterteilung: **26.01.2011**
(21) Anmeldenummer: 07725102.3
(22) Anmeldetag: 11.05.2007
(51) Int. Cl.: A01J 5/04

(54) **MILCHSAMMELSTÜCK, INSBESONDERE FÜR ZIEGEN UND SCHAFE**
MILK COLLECTING PIECE, IN PARTICULAR FOR GOATS AND SHEEP
COLLECTEUR DE TRAITE, NOTAMMENT POUR CHÈVRES ET BREBIS

(30) Priorität: 12.05.2006 DE 102006022624
(43) Veröffentlichungstag der Anmeldung: 18.02.2009
(73) Patentinhaber: GEA Farm Technologies GmbH, 59199 Bönen (DE)
(72) Erfinder: OBERLE, Christelle, 58640 Iserlohn (DE); WULLE, Manfred, 59227 Ahlen (DE); AUBURGER, Markus, 59558 Lippstadt (DE); ROHRING, Thomas, 45770 Marl (DE)
(74) Vertreter: Neumann, Ditmar
(86) Internationale Anmeldenummer: PCT/EP2007/004182
(87) Internationale Veröffentlichungsnummer: WO 2007/131715

(56) Entgegenhaltungen:
- EP-A- 0 223 536
- EP-A1- 0 093 216
- EP-A2- 0 377 482
- AU-B2- 436 345
- DE-A1- 3 128 162

## Beschreibung

Der Gegenstand der Erfindung bezieht sich auf ein Milchsammelstück für eine Melkanlage, insbesondere zum Melken von Ziegen oder Schafen.

Obwohl im folgenden die Erfindung in Verbindung mit einer Melkanlage zum Melken von Schafen beschrieben wird, wird darauf hingewiesen, dass sich der Gegenstand der Erfindung insbesondere zur Verwendung beim Melken von Ziegen, Lamas, Kamelen, Dromedaren, Büffeln, Stuten, Eseln, Yaks sowie anderen milchabgebenden Tieren eignet. Die Erfindung kann sowohl bei robotergestützten Melkanlagen sowie bei vollautomatischen, halbautomatischen als auch konventionellen Melkanlagen eingesetzt werden.

Zum Melken von milchabgebenden Tieren werden Melkzeuge verwendet, die ein Milchsammelstück aufweisen. Das Milchsammelstück ist über kurze Milchschläuche mit Melkbechern verbunden, die an die Zitzen eines Tieres angebracht werden. Die Anzahl der Melkbecher ist abhängig von der Anzahl der Zitzen des Tieres.

Die DE-U1-94 05 916 beschreibt ein Milchsammelstück für eine Melkanlage. Das Milchsammelstück besteht aus einem Gehäuseoberteil mit vier Einlaufstützen, einem Gehäuseunterteil mit einer annähend rotationssymetrischen vertikalen Gehäusewand, einem ebenen Gehäuseboden und einem Milchablaufstutzen. Gehäuseoberteil und Gehäuseunterteil sind zur Atmosphäre hin über Dichtungen abgedichtet. Vor dem Milchablaufstutzen ist nahe an das Gehäuseunterteil eine Verschlusskugel vorgesehen, mittels derer der Ablaufstutzen verschließbar ist.

Eine weitere Ausführungsform eines Milchsammelstücks ist durch die WO-A1-01/26451 vorbekannt. Dieses Milchsammelstück weist ein Gehäuse auf.

In das Gehäuse münden Milchschläuche. Innerhalb des Gehäuses ist eine Leitung angeordnet, welche auch einen Ablaufstutzen bildet. Die Leitung weist eine Öffnung auf, welche mittels einer Membran verschließbar ist. Quer zur Strömungsrichtung der Milch innerhalb der Leitung ist eine Barriere vorgesehen, so dass die Milch über diese Barriere strömen muss, wenn die Membran ihre Offenstellung eingenommen hat. In der geschlossenen Stellung liegt die Membran an der Barriere an, so dass der Strömungsweg der Milch aus dem Milchsammelstück unterbrochen wird.

Durch die DE 31 28 162 ist ein Milchsainmelstück für eine Melkanlage bekannt. Das Milchsammelstück weist ein Gehäuseoberteil und ein Gehäuseunterteil auf. Innerhalb des Gehäuseunterteils ist ein Milchablaufstutzen vorgesehen. Das Milchsammelstück weist wenigstens zwei Einlaufstutzen auf. Zwischen dem Gehäuseoberteil und dem Gehäuseunterteil ist eine trichterförmige Trennwand vorgesehen. Mittig der trichterförmigen Trennwand ist eine Abflussöffnung ausgebildet. Oberhalb der trichterförmigen Trennwand ist eine Membran vorgesehen, die mit einem Abschlusskolben verbunden ist. Der Abschlusskolben weist eine Stirnfläche auf, die so ausgebildet ist, dass sie in der unteren Endstellung des Abschlusskolbens die Flussöffnung in der trichterförmigen Trennwand verschließen kann.

Hiervon ausgehend liegt der Erfindung die Zielsetzung zugrunde, das bekannte Milchsammelstück so weiter zu bilden, dass ein Rückfluss der Milch über den Anschlussstutzen in die kurzen Milchschläuche zuverlässig unterbunden wird.

Diese Aufgabe wird erfindungsgemäß durch ein Milchsammelstück mit den Merkmalen des Anspruchs 1 gelöst. Vorteilhafte Weiterbildungen und Ausgestaltungen des erfindungsgemäßen Milchsammelstücks sind Gegenstand der abhängigen Ansprüche.

Das erfindungsgemäße Milchsammelstück für eine Melkanlage umfasst ein Gehäuseoberteil und ein Gehäuseunterteil. Das Gehäuseunterteil weist wenigstens zwei Einlaufstutzen und einen Milchablaufstutzen auf. Die wenigstens zwei Einlaufstutzen münden in einer Schale, deren Rand eine innerhalb des Gehäuseunterteils liegende Austrittsöffnung begrenzt. Die Schale ist beabstandet zur Innenwand des Gehäuses angeordnet, wobei wenigstens ein Schließelement vorgesehen ist, welches die Austrittsöffnung verschließt oder freigibt.

Durch diese erfindungsgemäße Ausgestaltung des Milchsammelstücks wird erreicht, dass ein Rückfluss der Milch vom langen Milchschlauch, der mit dem Milchablaufstutzen verbunden ist, in die Einlaufstutzen und somit in die Melkbecher, die über kurze Milchschläuche mit den Einlaufstutzen verbunden sind, vermieden wird.

Die erfindungsgemäße Ausgestaltung des Milchsammelstücks hat darüber hinaus den Vorteil, dass die Abnahme der Melkbecher von den Zitzen vereinfacht wird. Ist die Austrittsöffnung der wenigstens zwei Einlaufstutzen geschlossen, so können die Melkbecher abgezogen werden. Gegebenenfalls erfolgt eine Belüftung der Melkbecher, um eine noch schonendere Abnahme der Melkbecher von den Zitzen zu erreichen.

Die wenigstens zwei Einlaufstutzen münden in einer Schale, wobei der Rand der Schale die Austrittsöffnung begrenzt und die Schale beabstandet zur Innenwand des Gehäuseunterteils angeordnet ist. Bevorzugt ist dabei eine Anordnung, bei der die Schale etwa auf einer Längsachse des Milchsammelstücks, insbesondere im Zentrum des Gehäuseunterteils angeordnet ist. Von der Schale, die oberhalb des Milchablaufstutzens positioniert ist, fließt die Milch in das Gehäuseunterteil und von dort über den Milchablaufstutzen aus dem Milchsammelstück. Durch die Schale wird das Strömungsverhalten der Milch positiv beeinflusst. Die Strömung wird beruhigt, so dass ein Schäumen der Milch vermieden wird.

Vorzugsweise ist der Bereich des Gehäuseunterteils, welcher benachbart zum Einlaufstutzen liegt, insbesondere im wesentlichen kegelförmig ausgebildet, so dass eine noch weitere Beruhigung der Milch erreicht wird. Darüber hinaus wird durch den vorzugsweise kegelförmig ausgebildeten Bereich des Gehäuseunterteils sichergestellt, dass die Milch aus dem Milchsammelstück sicher und zuverlässig abfließt. Hierbei liegt der Eintritt in den Milchablaufstutzen am tiefsten Punkt des Milchsammelstücks.

Gemäß einer noch weiteren vorteilhaften Ausgestaltung der Erfindung wird vorgeschlagen, dass das Schließelement zur Anlage an den Rand der Schale bringbar ist. Hierzu wird ein sicheres und zuverlässiges Verschließen der Eintrittsöffnung erreicht.

Nach einer noch weiteren vorteilhaften Ausgestaltung des erfindungsgemäßen Milchsammelstücks wird vorgeschlagen, dass das Schließelement pneumatisch betätigbar ist. Hierdurch kann das Vakuumsystem der Melkanlage genutzt werden, so dass auch der apparative Aufwand verringert wird.

Das Schließelement weist vorzugsweise wenigstens eine Membran auf, welche zwischen dem Gehäuseunterteil und dem Gehäuseoberteil angeordnet ist. Das Schließelement bildet hierbei vorzugsweise eine Dichtung zwischen dem Gehäuseunterteil und dem Gehäuseoberteil. In Abhängigkeit von der Gestalt und/oder der Elastizität der Membran können unterschiedliche Schließelemente verwendet werden, deren Ansprechverhalten verschieden sein kann. Darüber hinaus eröffnen das erfindungsgemäße Milchsammelstück die Möglichkeit eines einfachen Austausches des Schließelementes.

Die Membran muss nicht zwingend den gleichen Querschnitt aufweisen, wie das Gehäuseunterteil bzw. das Gehäuseoberteil. Es besteht auch die Möglichkeit, dass die Membran an einem Tragelement angeordnet ist. Das Tragelement ist vorzugsweise ringförmig ausgebildet. Insbesondere wird vorgeschlagen, dass die Membran und das Tragelement einteilig, vorzugsweise einstückig, ausgebildet sind. Die Membran und das Tragelement können nach dem Zwei-Komponenten-Spritzverfahren hergestellt sein.

Gemäß einer noch weiteren vorteilhaften Ausgestaltung der Erfindung wird vorgeschlagen, dass die Membran wenigstens teilweise aus mindestens einem Polymer, insbesondere aus Elastomer oder Silikon hergestellt ist.

Gemäß einer noch weiteren vorteilhaften Ausgestaltung des erfindungsgemäßen Milchsammelstücks wird vorgeschlagen, dass das Gehäuseoberteil und wenigstens die Membran eine erste Kammer und das Gehäuseunterteil und wenigstens die Membran eine zweite Kammer begrenzen, wobei die erste und die zweite Kammer luftdicht voneinander getrennt sind und die erste Kammer wenigstens einen Anschlussstutzen aufweist. Mittels des Anschlussstutzens ist das Milchsammelstück mit einer Vakuumquelle verbindbar, so dass die erste Kammer mit einem Steuervakuum beaufschlagbar ist. Während des Melkvorgangs liegt in der zweiten Kammer ein Melkvakuum an. Wird die erste Kammer mit einem Steuervakuum beaufschlagt, welches im wesentlichen dem Melkvakuum entspricht, so nimmt die Membran ihre erste Position ein, in der sie, die Membran, die Austrittsöffnung freigibt. Wird über den Anschlussstutzen die erste Kammer mit Umgebungsatmosphäre verbunden, so entsteht zwischen der ersten Kammer und der zweiten Kammer eine Druckdifferenz. Bedingt durch diese Druckdifferenz wird die Membran ausgelenkt. Sie verschließt die Austrittsöffnung. Die Melkbecher können abgezogen werden.

Gegebenenfalls kann ein Sensor oder ein Indikator für die Lage der Membran vorgesehen sein, wodurch der Sensor oder Indikator wenisgtens einen Schaltvorgang auslöst, bei dem es sich beispielsweise darum handelt, dass das Melkvakuum abgeschaltet und der Melkvorgang insgesamt beendet wird, wenn die Membran ihre Schließstellung eingenommen hat.

Die Umschaltung zwischen Steuervakuum und Umgebungsatmosphäre kann automatisch erfolgen. Es besteht auch die Möglichkeit diese Umschaltung manuell vorzunehmen. Hierzu weist das erfindungsgemäße Milchsammelstück wenigstens ein Sperrmittel auf, durch welches die Verbindung zwischen dem Anschlussstutzen und der ersten Kammer geschlossen oder geöffnet werden kann, wobei die erste Kammer mit Umgebungsatmosphäre verbindbar ist. Das wenigstens eine Sperrmittel ist vorzugsweise so ausgebildet, dass dieses die Verbindung der ersten Kammer mit der Umgebungsatmosphäre öffnet, wenn die Verbindung zwischen dem Anschlussstutzen und der ersten Kammer geschlossen wird. Das Sperrmittel ist des Weiteren so ausgebildet, dass die Verbindung der ersten Kammer mit der Umgebungsatmosphäre geschlossen wird, wenn die Verbindung zwischen dem Anschlussstutzen und der ersten Kammer geöffnet wird.

Das Sperrmittel ist insbesondere als ein manuell verschwenkbares Organ ausgebildet, welches ein Sperrelement umfasst. Bei dem Sperrelement handelt es sich vorzugsweise um ein insbesondere kugelförmig ausgebildetes Sperrelement. Das kugelförmig ausgebildete Sperrelement ist in einer Tasche angeordnet, deren Länge größer ist als der Durchmesser des Sperrelementes, wobei das Sperrelement durch den Unterdruck im Anschlussstutzen zur Öffnung des Anschlussstutzens hin angesaugt wird, wenn das Sperrelement mit dem Anschlussstutzen ausgerichtet wird.

Insbesondere wird vorgeschlagen, dass das Sperrmittel in Richtung der Längsachse verschieblich ausgebildet ist. Durch die verschiebliche Ausgestaltung des Sperrmlittels wird während des Verschwenkvorgangs des Sperrmittels die Verbindung zur Umgebung als Umgebungsatmosphäre hin geöffnet bzw. geschlossen.

Weitere Einzelheiten und Vorteile des erfindungsgemäßen Milchsammelstücks werden anhand der in der Zeichnung dargestellten Ausführungsbeispiele erläutert, ohne dass der Gegenstand der Erfindung auf diese konkreten Ausführungsbeispiele beschränkt wird.

Es zeigen:
- Fig. 1:: schematisch ein erstes Ausführungsbeispiel eines Milchsammelstücks mit geöffneter Austrittsöffnung,
- Fig. 2:: das Milchsammelstück nach Fig. 1 mit geschlossener Austrittsöffnung,
- Fig. 3:: schematisch und in einer perspektivischen Ansicht ein zweites Ausfüh- rungsbeispiel eines Milchsammelstücks,
- Fig. 4:: in perspektivischer Ansicht das Gehäuseunterteil des Milchsammelstücks nach Fig..3,
- Fig. 5:: in einer Vorderansicht ein Bauteil des Gehäuseunterteils,
- Fig. 6:: das Bauteil in einer perspektivischen Ansicht von oben,
- Fig. 7:: von vorne und in perspektivischer Ansicht ein Sperrmittel und
- Fig. 8:: das Sperrmittel in perspektivischer Ansicht von hinten.

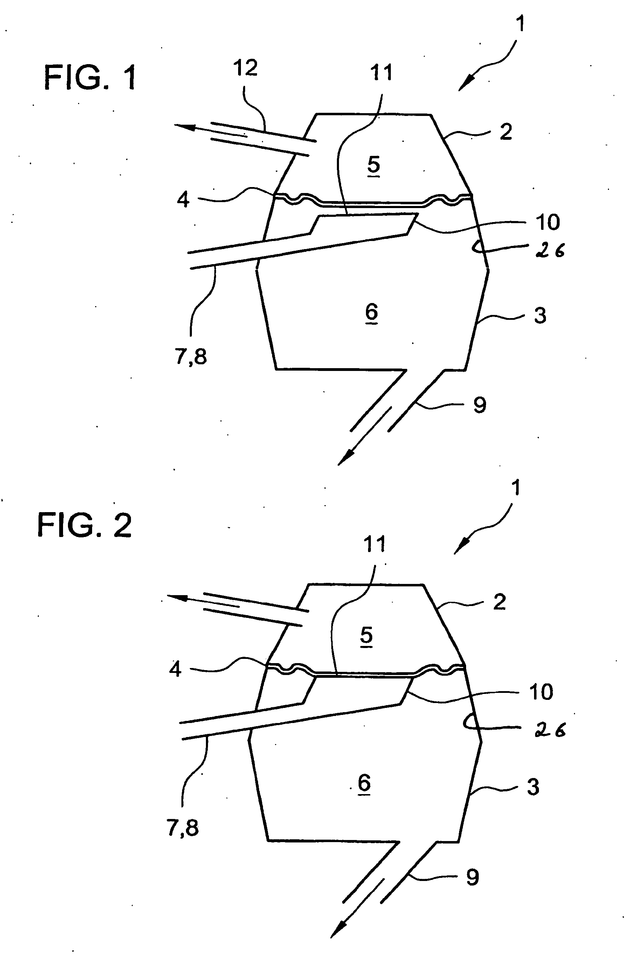

In der Fig. 1 ist schematisch ein erstes Ausführungsbeispiel eines erfindungsgemäßen Milchsammelstücks 1 für eine Melkanlage, insbesondere für eine Melkanlage zum Melken von Ziegen oder Schafen dargestellt. Das Milchsammelstück 1 weist ein Gehäuseoberteil 2 auf. Mit dem Gehäuseoberteil 2 ist lösbar ein Gehäuseunterteil 3 verbunden. Bei der Verbindung zwischen dem Gehäuseoberteil 2 und dem Gehäuseunterteil 3 kann es sich um eine form- oder kraftschlüssige Verbindung handeln. Die Gehäuseteile 2, 3 können beispielsweise miteinander verschraubt sein. Das Gehäuseoberteil 2 und das Gehäuseunterteil 3 können auch bajonettartig miteinander verbunden sein. Zur Abdichtung der Verbindungsstelle zwischen dem Gehäuseoberteil 2 und dem Gehäuseunterteil 3 kann wenigstens ein Dichtungselement vorgesehen sein.

Zwischen dem Gehäuseoberteil 2 und dem Gehäuseunterteil 3 ist ein Schließelement 4 angeordnet. Das Schließelement 4 und das Gehäuseoberteil 2 begrenzen eine erste Kammer 5. Das Gehäuseunterteil 3 und das Schließelement 4 begrenzen eine zweite Kammer 6.

Bei dem Schließelement 4 handelt es sich vorzugsweise um eine Membran, die wenigstens teilweise aus mindestens einem Polymer, insbesondere aus Silikon hergestellt ist. Der Rand der Membran kann ein Dichtungselement bilden, welche zur Abdichtung des Gehäuseoberteils 3 mit dem Gehäuseunterteil 2 dient. In dem dargestellten Ausführungsbeispiel ist die Membran im wesentlichen senkrecht zur Längsachse des Milchsammelstücks angeordnet.

Das Gehäuseunterteil 3 weist Einlaufstutzen 7, 8 auf, die sich in das Innere der zweiten Kammer 6 hinein erstrecken. In der Darstellung nach Fig. 1 sind die Einlaufstutzen 7, 8 hintereinander angeordnet, so dass lediglich ein Einlaufstutzen erkennbar ist.

Die aus dem Milchsammelstück 1 herausragenden Abschnitte der Einlaufstutzen 7, 8 dienen zur Verbindung mit einem kurzen Milchschlauch, an deren anderen Enden jeweils ein Melkbecher angeordnet ist. Am tiefsten Punkt des Gehäuseunterteils 3 ist ein Milchablaufstutzen 9 vorgesehen. Durch den Milchablaufstutzen 9 kann die über die Einlaufstutzen 7, 8 einfließende Milch aus der zweiten Kammer 6 abfließen.

Die wenigstens zwei Einlaufstutzen 7, 8 münden in einer Schale 10, die zum Schließelement 4 hin offen ist. Die Schale 10 weist einen Rand 11 auf, welcher die gemeinsame Austrittsöffnung 18 der Einlaufstutzen begrenzt. Die Schale 10 ist beabstandet zur Innenwand 26 des Gehäuseunterteils 3 angeordnet

Das Gehäuseoberteil 2 weist einen Anschlussstutzen 12 auf, über den die erste Kammer 5 mit einer Druckquelle verbindbar ist.

Während eines Melkvorgangs liegt in der zweiten Kammer 6 Melkvakuum an. Die erste Kammer 5 ist mit einer Druckquelle verbunden, so dass in der ersten Kammer 5 ein Druckniveau erzeugt wird, welches dem Druckniveau in der zweiten Kammer 6 entspricht. Hierdurch wirken keine resultierenden Drücke auf das elastisch ausgebildete Schließelement in Form einer Membran. Die Membran ist, wie aus der Fig. 1 ersichtlich ist, beabstandet vom Rand 11 der Schale 10. Die ermolkene Milch fließt über die Einlaufstutzen 7, 8 in die Schale 10 und von dort in die zweite Kammer 6, von wo aus sie über den Milchablaufstutzen 9 abgeleitet wird.

Wird der Melkvorgang beendet, so wird die erste Kammer 5 über den Anschlussstutzen 12 beispielsweise mit Umgebungsatmosphäre verbunden, während in der zweiten Kammer 6 weiterhin das Melkvakuum vorherrscht. Durch die zwischen der ersten Kammer 5 und der zweiten Kammer 6 herrschende Druckdifferenz entstehen Druckkräfte auf das Schließelement 4, so dass dieses ausgelenkt wird. Das Schließelement 4 wird an den Rand 11 der Schale 10 gedrückt und verschließt somit die gemeinsame Austrittsöffnung der Einlaufstutzen 7, 8. Das Vakuum am Zitzenbecher kann abgebaut werden, so dass die Zitzenbecher abgenommen werden können. Die Abnahme der Zitzenbecher kann automatisch beispielsweise mittels einer entsprechenden Abnahmeeinrichtung erfolgen. Die Druckveränderung in der ersten Kammer 5 kann über ein entsprechendes Steuergerät gesteuert werden. Diese Druckänderung kann in Abhängigkeit von der Melkzeit und/oder von der Veränderung des Milchstroms erfolgen.

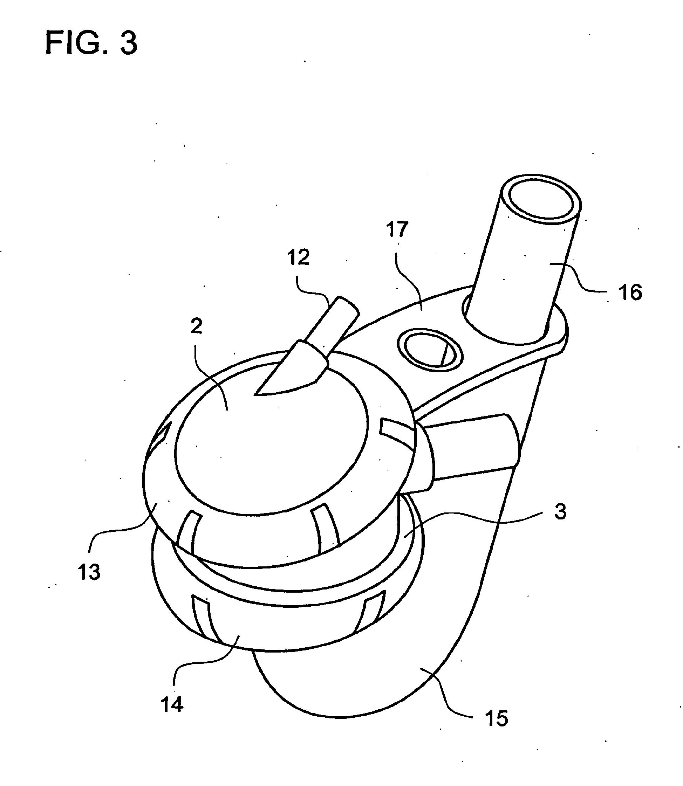

In der Fig. 3 ist ein zweites Ausführungsbeispiel eines erfindungsgemäßen Milchsammelstücks in einer perspektivischen Ansicht von schräg oben dargestellt.

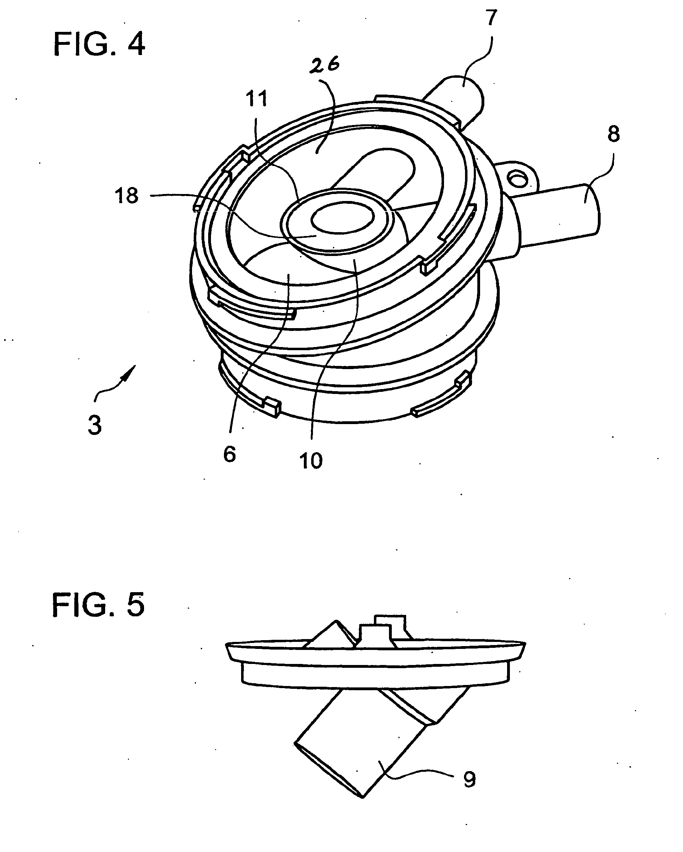

Das Milchsammelstück 1 weist ein Gehäuseoberteil 2 auf. Das Gehäuseoberteil 2 weist einen Anschlussstutzen 12 auf. Das Gehäuseoberteil 2 ist über einen Schraubring 13 mit einem Gehäuseunterteil 3 verbunden. Das Gehäuseunterteil 3 ist in dem in der Fig. 3 dargestellten Ausführungsbeispiel eines Milchsammelstücks zweiteilig ausgebildet. Die beiden Teile des Gehäuseunterteils sind in der Fig. 4 und 5 dargestellt. Sie sind miteinander durch einen Schraubring 14 verbunden. Mit dem Milchablaufstutzen 9 ist ein bogenförmiges Leitungsstück 15 verbunden. Mit diesem Leitungsstück 15 ist ein Rohr 16 verbunden, welches zur Ableitung der ermolkenen Milch dient. Das Leitungsstück 15 ist vorzugsweise elastisch ausgebildet. Mit dem Milchsammelstück 1 ist ein Halter 17 verbunden, der die Lage des Milchsammelstücks 1 festlegt.

Fig. 4 zeigt das Gehäuseunterteil 3 in einer perspektivischen Ansicht von oben. Das Gehäuseunterteil 3 weist zwei Einlaufstutzen 7, 8 auf. Die Einlaufstutzen 7, 8 erstrecken sich in die zweite Kammer 6. Sie münden in einer Schale 10. Die Schale 10 weist einen kreisförmigen Rand 11 auf, der die Austrittsöffnung 18 begrenzt. An den Rand 11 ist eine nicht dargestellte Membran bringbar, so dass die Membran die Austrittsöffnung 18 verschließt oder freigibt. Hierzu wird zwischen der ersten Kammer, welche durch das Gehäuseoberteil 2 und die Membran begrenzt wird, ein entsprechender Druck aufgebaut, bei dem es sich beispielsweise um Umgebungsdruck handeln kann. In der zweiten Kammer 6, welche durch das Gehäuseunterteil 3 und die nicht dargestellte Membran begrenzt ist, herrscht Melkvakuum.

Zum verbesserten Abfließen der Milch aus dem Gehäuseunterteil ist ein Bereich 19 vorgesehen, der benachbart zum Milchablaufstutzen 9 ausgebildet ist, im wesentlichen kegelförmig.

Zur manuellen Abnahme der Melkbecher nach einem Melkvorgang kann das Milchsammelstück derart ausgebildet sein, dass es wenigstens ein Sperrmittel 25 aufweist, so dass dieses die Verbindung der ersten Kammer mit der Umgebungsatmosphäre öffnet, wenn die Verbindung zwischen dem Anschlussstutzen und der ersten Kammer geschlossen wird oder die Verbindung der ersten Kammer mit der Umgebungsatmosphäre schließt, wenn die Verbindung zwischen dem Anschlussstutzen und der ersten Kammer geöffnet wird.

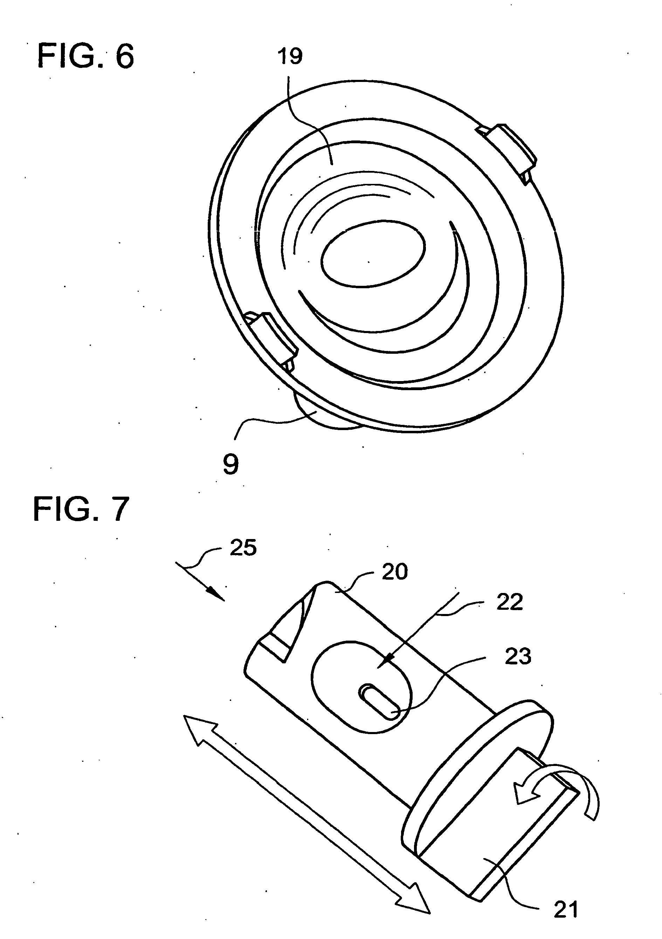

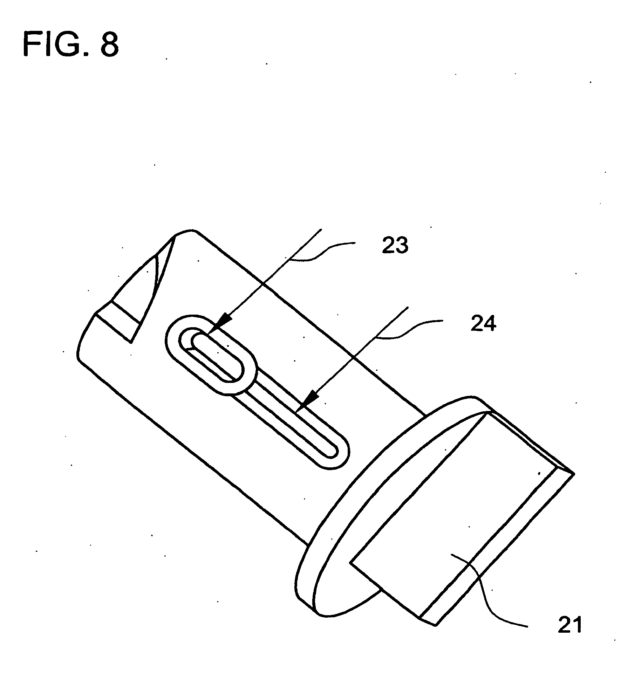

Das Sperrmittel 25 weist vorzugsweise ein verschwenkbares Organ 20 auf, welches in den Figuren 7 und 8 beispielhaft dargestellt ist. Das Organ 20 ist im Wesentlichen zylinderförmig ausgebildet. Es weist an einem Ende eine Lasche 21 auf, mittels derer das Organ 20 um seine Längsachse verschwenkt werden kann. Innerhalb des Organs 20 ist eine Tasche 22 ausgebildet, die zur Aufnahme eines Sperrelementes bestimmt ist. Bei dem Sperrelement handelt es sich vorzugsweise um ein kugelförmiges Element. In die Tasche 22 mündet ein Kanal 23, der sich quer durch das Organ 20 hindurch erstreckt. An dem der Tasche 22 gegenüberliegenden Ende des Kanals 23 ist eine Nut 24 vorgesehen, die mit dem Kanal 23 verbunden ist.

Ein nicht dargestelltes Gehäuseoberteil ist so ausgebildet, dass es das Organ 20 aufnehmen kann. Es weist einen Anschlussstutzen 12 auf. Darüber hinaus ist in dem Gehäuseoberteil eine Belüftungsöffnung vorgesehen. Durch Verschwenken des Organs 20 wird dieses auch in Richtung der Achse bewegt, wie dies durch die Pfeile in der Fig. 7 angedeutet ist. In der einen Stellung verschließt das Organ 20 die nicht dargestellte Belüftungsöffnung und verbindet den Anschlussstutzen über den Kanal 23 mit der ersten Kammer 5 des Milchsammelstücks.

Wird das Organ 20 in eine Position verschwenkt, in der die Tasche 22 mit dem nicht dargestellten Sperrelement gegenüber der Mündung des Anschlussstutzens gebracht, so wird das Schließelement an die Mündung des Anschlussstutzens gesaugt. Der Kanal 23 bildet mit der Belüftungsöffnung über die Nut 24 eine Verbindung mit der ersten Kammer 5, so dass diese belüftet wird. Die Membran wird zur Anlage an den Rand der Schale gebracht.

### Bezugszeichenliste

- 1: Milchsammelstück
- 2: Gehäuseoberteil
- 3: Gehäuseunterteil
- 4: Schließelement
- 5: erste Kammer
- 6: zweite Kammer
- 7: Einlaufstutzen
- 8: Einlaufstutzen
- 9: Milchablaufstutzen
- 10: Schale
- 11: Rand
- 12: Anschlussstutzen
- 13: Schraubring
- 14: Schraubring
- 15: Leitungsstück
- 16: Rohr 17 Halter
- 18: Austrittsöffnung
- 19: Bereich
- 20: Organ
- 21: Lasche
- 22: Tasche
- 23: Kanal
- 24: Nut
- 25: Sperrmittel
- 26: Innenwand

## Patentansprüche

1. Milchsammelstück (1) für eine Melkanlage umfassend ein Gehäuseoberteil (2) und ein Gehäuseunterteil (3), welches wenigstens zwei Einlaufstutzen (7, 8) und einen Milchablaufstutzen (9) aufweist, **dadurch gekennzeichnet, dass** die wenigstens zwei Einlaufstutzen (7, 8) in einer Schale (10) münden, deren Rand (11) eine innerhalb des Gehäuseunterteils (3) liegende Austrittsöffnung (18) begrenzt, dass die Schale (10) beabstandet zu Innenwand (26) des Gehäuseunterteils (3) angeordnet ist, wobei wenigstens ein Schließelement (4) vorgesehen ist, welches die Austrittsöffnungen (18) verschließt oder frei gibt.

2. Milchsammelstück nach Anspruch 1, **dadurch gekennzeichnet, dass** das Schließelement (4) zur Anlage an den Rand (11) der Schale (10) bringbar ist.

3. Milchsammelstück nach Anspruch 1 oder 2, **dadurch gekennzeichnet, dass** das Schließelement (4) pneumatisch betätigbar ist.

4. Milchsammelstück nach Anspruch 3, **dadurch gekennzeichnet, dass** das Schließelement (4) eine Membran aufweist, welche zwischen dem Gehäuseoberteil (2) und dem Gehäuseunterteil (3) angeordnet ist.

5. Milchsammelstück nach Anspruch 4, **dadurch gekennzeichnet, dass** die Membran in einem Tragelement angeordnet ist.

6. Milchsammelstück nach Anspruch 5, **dadurch gekennzeichnet, dass** die Membran und das Tragelement einteilig, insbesondere einstückig ausgebildet sind.

7. Milchsammelstück nach Anspruch 4, 5 oder, **dadurch gekennzeichnet, dass** die Membran wenigsten teilweise aus mindestens einem Polymer, insbesondere aus Silikon hergestellt ist.

8. Milchsammelstück nach wenigstens einem der Ansprache 4 bis 7, **dadurch gekennzeichnet, dass** das Gehäuseoberteil (2) und wenigstens die Membran eine erste Kammer (5) und das Gehäuseunterteil (3) und wenigstens die Membran eine zweite Kammer (6) begrenzen, wobei die erste und die zweite Kammer (5, 6) luftdicht voneinander getrennt sind und die erste Kammer (5) wenigstens einen Ansehlussstutzen (12) aufweist.

9. Milchsammelstück nach dem Oberbegriff des Anspruchs 1, insbesondere nach einem der Ansprüche 1 bis 8, **dadurch gekennzeichnet, dass** wenigstens ein Sperrmittel (25) vorgesehen ist, durch welches die Verbindung zwischen dem Anschlussstutzen (12) und der ersten Kammer (5) geschlossen oder geöffnet werden kann.

10. Milchsammelstück nach Anspruch 8 oder 9, **dadurch gekennzeichnet, dass** die ersten Kammer (5) mit Umgebungsatmosphäre verbindbar ist.

11. Milchsammelstück nach Anspruch 10, **dadurch gekennzeichnet, dass** wenigstens eine Sperrmittel (25) so ausgebildet ist, dass dieses die Verbindung der ersten Kammer (5) mit der Umgebungsatmosphäre öffnet, wenn die Verbindung zwischen dem Anschlussstutzen (12) und der ersten Kammer (5) geschlossen oder die Verbindung der ersten Kammer (5) mit der Umgebungsatmosphäre schließt, wenn die Verbindung zwischen dem Anschlussstutzen (12) und der ersten Kammer (5) geöffnet wird.

12. Milchsammelstück nach Anspruch 9, 10 oder 11, **dadurch gekennzeichnet, dass** Spenmittel (25) ein insbesondere manuell verschwenkbares Organ (20) aufweist, welches ein Sperrelement umfasst.

13. Milchsammelstück nach Anspruch 12, **dadurch gekennzeichnet, dass** das Organ (20) eine Tasche (22) aufweist, in der das insbesondere kegelförmig ausgebildetes Sperrelement angeordnet ist.

14. Milchsammelstück nach einem der Ansprüche 9 bis 13, **dadurch gekennzeichnet, dass** das Sperrmittel (25) in Richtung der Längsachse verschieblich ausgebildet ist.

## Claims

1. Milk collecting piece (1) for a milking plant, comprising an upper housing part (2) and a lower housing part (3) which has at least two inflow connectors (7, 8) and a milk outflow connector (9), **characterized in that** the at least two inflow connectors (7, 8) open into a dish (10), the edge (11) of which delimits an outlet opening (18) lying within the lower housing part (3), and **in that** the dish (10) is arranged at a distance from the inner wall (26) of the lower housing part (3), with at least one closing element (4) which closes or opens up the outlet openings (18) being provided.

2. Milk collecting piece according to Claim 1, **characterized in that** the closing element (4) can be brought to bear against the edge (11) of the dish (10).

3. Milk collecting piece according to Claim 1 or 2, **characterized in that** the closing element (4) is pneumatically actuable.

4. Milk collecting piece according to Claim 3, **characterized in that** the closing element (4) has a diaphragm which is arranged between the upper housing part (2) and the lower housing part (3).

5. Milk collecting piece according to Claim 4, **characterized in that** the diaphragm is arranged in a supporting element.

6. Milk collecting piece according to Claim 5, **characterized in that** the diaphragm and the supporting element are designed as a single part, and in particular are of integral design.

7. Milk collecting piece according to Claim 4 or 5, **characterized in that** the diaphragm is at least partially produced from at least one polymer, in particular from silicone.

8. Milk collecting piece according to at least one of Claims 4 to 7, **characterized in that** the upper housing part (2) and at least the diaphragm delimit a first chamber (5), and the lower housing part (3) and at least the diaphragm delimit a second chamber (6), the first and the second chamber (5, 6) being separated from each other in a hermetically sealed manner, and the first chamber (5) having at least one connecting branch (12).

9. Milk collecting piece according to the preamble of Claim 1, in particular according to one of Claims 1 to 8, **characterized in that** there is at least one blocking means (25), by means of which the connection between the connecting branch (12) and the first chamber (5) can be closed or opened.

10. Milk collecting piece according to Claim 8 or 9, **characterized in that** the first chamber (5) can be connected to the surrounding atmosphere.

11. Milk collecting piece according to Claim 10, **characterized in that** at least one blocking means (25) is designed in such a manner that it opens the connection of the first chamber (5) to the surrounding atmosphere when the connection between the connecting branch (12) and the first chamber (5) is closed, or closes the connection of the first chamber (5) to the surrounding atmosphere when the connection between the connecting branch (12) and the first chamber (5) is open.

12. Milk collecting piece according to Claim 9, 10 or 11, **characterized in that** the blocking means (25) has an in particular manually pivotable member (20) comprising a blocking element.

13. Milk collecting piece according to Claim 12, **characterized in that** the member (20) has a pocket (22) in which the blocking element, which in particular is of spherical design, is arranged.

14. Milk collecting piece according to one of Claims 9 to 13, **characterized in that** the blocking means (25) is designed to be displaceable in the direction of the longitudinal axis.

## Revendications

1. Collecteur de traite (1), pour une installation de traite comprenant une partie supérieure de boîtier (2) et une partie inférieure de boîtier (3), qui présente au moins deux tubulures d'entrée (7, 8) et une tubulure de sortie de lait (9), **caractérisé en ce que** les au moins deux tubulures d'entrée (7, 8) débouchent dans une coque (10) dont le bord (11) délimite une ouverture de sortie (18) située à l'intérieur de la partie inférieure de boîtier (3), **en ce que** la coque (10) est disposée à distance de la paroi interne (25) de la partie inférieure de boîtier (3), au moins un élément de fermeture (4) étant prévu, lequel ferme ou libère les ouvertures de sortie (18).

2. Collecteur de traite selon la revendication 1, **caractérisé en ce que** l'élément de fermeture (4) peut être amené en appui contre le bord (11) de la coque (10).

3. Collecteur de traite selon la revendication 1 ou 2, **caractérisé en ce que** l'élément de fermeture (4) peut être commandé pneumatiquement.

4. Collecteur de traite selon la revendication 3, **caractérisé en ce que** l'élément de fermeture (4) présente une membrane qui est disposée entre la partie supérieure de boîtier (2) et la partie inférieure de boîtier (3).

5. Collecteur de traite selon la revendication 4, **caractérisé en ce que** la membrane est disposée dans un élément de support.

6. Collecteur de traite selon la revendication 5, **caractérisé en ce que** la membrane et l'élément de support sont réalisés de manière unitaire, notamment d'une seule pièce.

7. Collecteur de traite selon la revendication 4 ou 5, **caractérisé en ce que** la membrane est fabriquée au moins en partie à partir d'un polymère, en particulier en silicone.

8. Collecteur de traite selon au moins l'une quelconque des revendications 4 à 7, **caractérisé en ce que** la partie supérieure de boîtier (2) et au moins la membrane délimitent une première chambre (5) et la partie inférieure de boîtier (3) et au moins la membrane délimitent une deuxième chambre (6), la première et la deuxième chambre (5, 6) étant séparées de manière étanche à l'air l'une de l'autre et la première chambre (5) présentant au moins une tubulure de raccordement (12).

9. Collecteur de traite selon le préambule de la revendication 1, notamment selon l'une quelconque des revendications 1 à 8, **caractérisé en ce qu'**au moins un moyen de blocage (25) est préau, lequel permet de fermer ou d'ouvrir la connexion entre la tubulure de raccordement (12) et la première chambre (5).

10. Collecteur de traite selon la revendication 8 ou 9, **caractérisé en ce que** la première chambre (5) peut être connectée à l'atmosphère environnante.

11. Collecteur de traite selon la revendication 10, **caractérisé en ce qu'**au moins un moyen de blocage (25) est réalisé de telle sorte qu'il ouvre la connexion de la première chambre (5) à l'atmosphère environnante, quand la connexion entre la tubulure de raccordement (12) et la première chambre (5) est fermée, ou qu'il ferme la connexion de la première chambre (5) à l'atmosphère environnante quand la connexion entre la tubulure de raccordement (12) et la première chambre (5) est ouverte.

12. Collecteur de traite selon la revendication 9, 10 ou 11, **caractérisé en ce que** le moyen de blocage (25) présente un organe (20) pouvant pivoter, notamment manuellement, qui comprend un élément de blocage.

13. Collecteur de traite selon la revendication 12, **caractérisé en ce que** l'organe (20) présente une cavité (22) dans laquelle est disposé le élément de blocage réalisé essentiellement sous forme sphérique.

14. Collecteur de traite selon l'une quelconque des revendications 9 à 13, **caractérisé en ce que** le moyen de blocage (25) est réalisé de manière déplaçable dans la direction de l'axe longitudinal.
